(19) Europäisches Patentamt
European Patent Office
Office européen des brevets

(11) **EP 1 547 705 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(51) Int Cl.:
***B22D 11/04*** *(2006.01)*

(21) Anmeldenummer: **03029867.3**

(22) Anmeldetag: **27.12.2003**

(54) **Verfahren zum Stranggiessen von Knüppel- und Vorblocksträngen und Formhohlraum einer Stranggiesskokille**

Method for the continuous casting of billet- and bloom-strands and cavity of a continuous casting mold

Procédé pour la coulée continue des billettes et blooms et cavité d'une lingotière pour la coulée continue

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**29.06.2005 Patentblatt 2005/26**

(73) Patentinhaber: **CONCAST AG**
**8027 Zürich (CH)**

(72) Erfinder:
• **Roehrig, Adalbert**
**8800 Thalwil (CH)**
• **Kawa, Franz**
**8134 Adliswil (CH)**

(74) Vertreter: **Luchs, Willi et al**
**Luchs & Partner**
**Patentanwälte**
**Schulhausstrasse 12**
**8002 Zürich (CH)**

(56) Entgegenhaltungen:
**EP-A- 0 875 312      WO-A-96/33034**
**US-A- 5 360 053**

• **DATABASE WPI Week 197811 Derwent Publications Ltd., London, GB; AN 1978-20393A XP002285520 -& JP 53 011124 A (HITACHI LTD) 1. Februar 1978 (1978-02-01)**
• **PATENT ABSTRACTS OF JAPAN Bd. 009, Nr. 168 (M-396), 13. Juli 1985 (1985-07-13) -& JP 60 040647 A (SHIN NIPPON SEITETSU KK), 4. März 1985 (1985-03-04)**
• **PATENT ABSTRACTS OF JAPAN Bd. 1999, Nr. 11, 30. September 1999 (1999-09-30) -& JP 11 151555 A (SHINKO METAL PRODUCTS KK), 8. Juni 1999 (1999-06-08)**
• **IRONMAKING AND STEELMAKING, Bd. 30, Nr. 6, Dezember 2003 (2003-12), Seiten 503-510, XP0001181788**
• **PATENT ABSTRACTS OF JAPAN Bd. 1998, Nr. 02, 30. Januar 1998 (1998-01-30) -& JP 1997 092626 A (MITSUBISHI HEAVY IND. LTD), 7. Oktober 1997 (1997-10-07)**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft einen Formhohlraum einer Stranggiesskokille gemäss Oberbegriff von Anspruch 1.

Strangguss-Langprodukte werden überwiegend in Rohrkokillen mit Rechteck-, insbesondere mit angenähertem Quadrat- oder Rundquerschnitt vergossen. Die Knüppel- und Vorblockstränge werden anschliessend durch Walzen oder Schmieden weiterverarbeitet.

Für eine Erzeugung von Stranggiessprodukten mit guter Oberflächen- und Gefügequalität, insbesondere von Knüppel- und Vorblocksträngen, ist ein gleichmässiger Wärmeübergang entlang der Umfangslinie des Strangquerschnittes zwischen dem sich bildenden Strang und der Formhohlraumwand von ausschlaggebender Bedeutung. Viele Vorschläge sind bekannt, die Formhohlraumgeometrie insbesondere in den Bereichen der Eckhohlkehlen des Formhohlraumes so auszubilden, dass zwischen der sich bildenden Strangschale und der Kokillenwand keine Luftspalte entstehen, die ein Wiedererwärmen der Strangschale bzw. einen ungleichmässigen Wärmeübergang entlang der Umfangslinie des Strangquerschnittes verursachen.

Ecken des Formhohlraumes von Rohrkokillen sind durch Hohlkehlen abgerundet. Je grösser die Hohlkehlen im Formhohlraum der Kokille gestaltet sind, um so schwieriger ist eine gleichmässige Abkühlung zwischen einer sich bildenden Strangschale und den Kokillenwänden, insbesondere über den Formhohlraumumfang, zu erreichen. Die beginnende Erstarrung des Stranges kurz unterhalb des Badspiegels in der Kokille verläuft an geraden Abschnitten des Formhohlraumumfanges unterschiedlich zu den Hohlkehlbereichen. Der Wärmefluss an den geraden oder im wesentlichen geraden Abschnitten ist quasi eindimensional und folgt dem Gesetz des Wärmedurchganges durch eine ebene Wand. Im Gegensatz dazu ist der Wärmefluss in den abgerundeten Eckbereichen zweidimensional und er folgt dem Gesetz des Wärmedurchganges durch eine gekrümmte Wand.

Die entstehende Strangschale wird in der Regel in den Eckbereichen zunächst dicker als an den geraden Flächen und beginnt zeitlich früher und stärker zu schrumpfen. Dies führt dazu, dass schon nach ca. 2 Sekunden sich die Strangschale in den Eckbereichen von der Kokillenwand abhebt und sich ein Luftspalt bildet, der den Wärmedurchgang drastisch verschlechtert. Diese Verschlechterung des Wärmedurchganges verzögert nicht nur das weitere Schalenwachstum, es kann sogar zu einem Wiederaufschmelzen von bereits erstarrten inneren Schichten der Strangschale kommen. Dieses Schaukeln des Wärmeflusses - Abkühlen und Wiedererwärmen - führt zu Strangfehlem wie Oberflächen- und inneren Längsrissen an den Kanten bzw. in kantennahen Bereichen, sowie zu Formfehlern wie Rhomboidität, Einziehungen etc.

Je grösser die Hohlkehlen gegenüber der Seitenlänge des Strangquerschnittes dimensioniert werden, insbesondere wenn die Hohlkehlradien 10 % und mehr der Seitenlänge des Formhohlraumquerschnittes betragen, um so häufiger und grösser werden die geschilderten Strangfehler. Dies ist ein Grund, weshalb die Hohlkehlradien in der Regel auf 5 bis 8 mm begrenzt werden, obwohl für das nachfolgende Walzen grössere Abrundungen an den Strangkanten vorteilhaft wären

Aus JP-A-53 011124 ist eine Knüppelkokille zum Stranggiessen mit hohlkehlartig abgerundeten Eckradien bekannt. In solchen Kokillen kann sich der Strang unregelmässig abkühlen und es können Stränge mit spiesskantigem Querschnitt und entsprechenden Kantenfehlem, wie Risse etc., entstehen. Um solche Strangfehler zu vermeiden, wird in diesem Dokument vorgeschlagen, einen viereckigen Kokillenhohlraum mit 2 kleinen und 2 grossen Eckhohlkehlen auszugestalten. Durch diese unterschiedlichen Eckradien der Hohlkehlen soll gezielt eine unregelmässig dicke Strangschale zur Erstarrung gebracht werden. Unmittelbar am Kokillenaustritt soll eine verzögerte Erstarrung in den Ecken mit grossen Radien durch eine verstärkte Kantenkühlung im Sekundärkühlbereich kompensiert werden. Diese Massnahmen sollen zu einem verzugsfreien Strangquerschnitt führen.

Aus JP-A-60 040647 ist eine Stranggiesskokille für einen Vorprofilstrang bekannt. Beim Giessen von Vorprofilsträngen entstehen oft Längsrisse beim Uebergang vom Mittelsteg zu den beiden Endflanschen. Dieser Uebergangsteil stellt in der Kokille einen konvex abgerundeten Kantenteil dar, auf welchen sich der Profilstrang beim Abkühlen des Mittelsteges leicht aufschrumpft Um dieses Aufschrumpfen bzw. die Entstehung von Rissen zu vermeiden, wird in diesem Dokument vorgeschlagen, diese konvexe Uebergangskurve der Kokille mit einer kontinuierlich sich vergrössemden Krümmung zum Mittelsteg hin auszubilden.

Aus JP-A-11 151555 ist eine weitere Kokille zum Stranggiessen von Knüppel- und Vorblocksträngen bekannt. Um auch bei dieser Kokille eine rhombische Verformung des Strangquerschnittes zu vermeiden und um zusätzlich die Giessgeschwindigkeit zu erhöhen, wird die Kokille an den vier Ecken, die mit Hohlkehlen versehen sind, mit speziell ausgeformten Eckkühlteilen versehen. Auf der Eingiessseite stellen diese Eckkühlteile kreisförmige Ausnehmungen in der Kokillenwand dar, die in Stranglaufrichtung sich zurückbilden und zum Kokillenausgang hin sich auf die Abrundung der Eckhohlkehle reduzieren. Der Krümmungsgrad der kreisförmigen Ausnehmung nimmt in Stranglaufrichtung zum Kokillenausgang hin zu. Diese Formgebung soll einen ununterbrochenen Kontakt zwischen dem Eckbereich der Strangschale und den Eckteilen der Kokille sicherstellen.

Aus JP-OS 09 262641 A ist es bekannt, einen rechteckigen Formhohlraum einer Knüppelkokille in den Eckbereichen mit kreisförmigen Hohlkehlen zu versehen. Die Hohlkehlradien werden derart bemessen, dass sie am Kokillenausgang grösser als an der Stahleintrittsseite sind. Durch diese Massnahme soll sich der Formhohlraum in den Eckbereichen in Kokillenlängsrichtung verjüngen und dadurch der Kontakt zwischen der Form und der Strangschale aufrecht erhalten bleiben.

Der Erfindung liegt die Aufgabe zu Grunde, eine Formhohlraumgeometrie für eine Stranggiesskokille zu schaffen, die optimale Verhältnisse für einen gleichmässigen Wärmeaustausch zwischen der sich bildenden Strangschale und der Kokillenwand entlang der Umfangslinie des Strangquerschnittes und folglich ein symmetrisches Temperaturfeld in der Strangschale sicherstellt. Die Kühlung und die Formhohlraumgeometrie sollen insbesondere entlang dem Formhohlraumumfang mit gebogenen Wandabschnitten und dem Uebergang von gebogenen zu im wesentlichen geraden Wandabschnitten optimiert werden. Dadurch soll ein verbessertes gleichmässiges Erstarrungsprofil einer sich bildenden Strangschale beim Durchlauf durch die Kokille erreicht werden, um Spannungen in der Strangschale, die Bildung von Luftspalten zwischen der Strangschale und der Kokillenwand, Einziehungen, Spiesskantigkeit des Strangquerschnittes und Risse in der Strangschale etc. zu vermeiden. Im weiteren soll ein solcher Formhohlraum gegenüber dem Stand der Technik höhere Giessgeschwindigkeiten ermöglichen sowie kostengünstig herstellbar sein.

Gemäss der Erfindung wird diese Zielsetzung durch die Summe der Merkmale des Vorrichtungsanspruches 1 erreicht.

Mit dem erfindungsgemässen Verfahren und der erfindungsgemässen Geometrie des Kokillenhohlraumes ist es möglich, optimale Verhältnisse für einen gleichmässigen Wärmeaustausch entlang der Umfangslinie des Strangquerschnittes zwischen einer sich bildenden Strangschale und der Formhohlraumwand zu schaffen. Der optimal gestaltete gleichmässige Wärmeaustausch stellt sicher, dass die in der Kokille sich bildende Strangschale mit einem, über den Umfang gesehen, gleichmässigen Kristallgefüge ohne Fehlstellen wie Risse, Spannungskonzentrationen, Spiesskantigkeit etc. erstarrt. Im weiteren ist es möglich, solche Formhohlräume durch mathematische Kurvenfunktionen zu definieren und auf NC Bearbeitungsmaschinen wirtschaftlich herzustellen.

Wenn die Konizität des Formhohlraumes für eine bestimmte Stahlqualität und eine bestimmte Verweilzeit eines sich bildenden Stranges innerhalb des Kokillenhohlraumes festgelegt ist, kann durch Giessversuche ein gleichmässiges Schalenwachstum bzw. ein gleichmässiger Sollwärmedurchgang entlang der Umfangslinie überprüft werden. Um eventuell verbleibende Unterschiede im Sollwärmedurchgang zwischen der sich bildenden Strangschale und der Formhohlraumwand auszugleichen, können, gemäss einer vorteilhaften Ausführungsform, Formhohlraumwände mit grösserem Krümmungsgrad schwächer, bzw. solche mit kleinerem Krümmungsgrad stärker gekühlt werden.

In einer herkömmlichen Kokille schliessen gerade Linien des Formhohlraumumfanges tangential im sogenannten Tangentpunkt an eine Kreisbogenlinie der Eckenabrundung an. Solche punktförmige Uebergänge und kreisförmige Abrundungen sind mit Vorteil durch Bogenlinien mit einer Form einer Kurvenfunktion mit einem oder zwei Basisparametern und mit einem Exponenten, z.B. Superellipse oder Superkreis, zu ersetzen. Im weiteren kann durch passende Auswahl der Basisparameter und Exponenten der mathematischen Kurvenfunktion die Krümmung von in Stranglaufrichtung sich folgenden Bogenlinien stetig oder unstetig verändert werden. Durch Verkleinerung bzw. Vergrösserung des Exponenten können Bogenlinienformen und somit die Hohlraumgeometrie den gegebenen Giessparametem angepasst werden.

Wenn der Berührungskontakt zwischen der sich bildenden Strangschale und der gekühlten Kokillenwand beim Durchlauf durch die Kokille nicht durch unkontrollierte Luftspaltbildung unterbrochen wird, so folgte der Wärmefluss physikalischen Wärmeflussgesetzen. Dieser idealisierte Zustand setzt voraus, dass auch die Geometrie des Kokillenhohlraumes gemäss den physikalischen Gesetzen des Wärmeflusses einerseits und der Schwindung der Strangschale anderseits aufgebaut ist und die Formhohlraumgeometrie nach mathematisch definierten Kurvenfunktionen aufgebaut ist. Gemäss einem Ausführungsbeispiel ergibt sich eine optimale mathematisch definierte Formhohlraumgeometrie, wenn die Bogenlinien der Umfangslinie des Formhohlraumes gemäss der Kurvenfunktion einer Superellipse

$$\left|\frac{X}{A}\right|^n + \left|\frac{Y}{B}\right|^n = 1$$

gewählt werden und in Stranglaufrichtung sich folgende Bogenlinien durch Wahl des Exponenten "n" und den Basisparameter A und B (Ellipsenhalbachsen) in ihrer Krümmung bzw. ihrem Krümmungsgrad verändert werden.

Zur Erreichung eines im wesentlichen gleichmässigen Sollwärmedurchganges entlang der Umfangslinie ist es zusätzlich möglich, die Strangschale innerhalb der Kokille leicht plastisch zu verformen, d.h. sie zu zwingen, sich der Hohlraumgeometrie anzupassen. Gemäss einem weiteren Ausführungsbeispiel wird vorgeschlagen, die Umfangslinie durch vier Bogenlinien, die je einen Winkel von 90° einschliessen, zusammenzusetzen. In Stranglaufrichtung sich folgende Bogenlinien werden so dimensioniert, dass eine konvexe Strangschale auf der Eingiessseite der Kokille, mindestens auf einer ersten Teillänge der Kokille, beim Durchlauf durch den Kokillenhohlraum derart verformt wird, dass mindestens in Mittelbereichen zwischen den Eckbereichen sich die Konvexität der Strangschale vermindert oder, mit anderen Worten, sich die Bogenlinien in den Mittelbereichen des Strangumfanges strecken, bzw. sich der Krümmungsgrad 1/R verkleinert.

Soll beispielsweise in einem rechteckähnlichen, vorzugsweise quadratähnlichen Formhohlraumquerschnitt ein hohlkehlartig ausgebildeter Eckbereich zwischen vier im wesentlichen ebenen Seitenwänden gestaltet werden, so kann gemäss einem Ausführungsbeispiel der Krümmungsgrad von in Stranglaufrichtung sich folgenden Hohlkehlbogen gemäss der Kurvenfunktion $|X|^n + |Y|^n = |R|^n$ gewählt und der Exponent "n" zwischen 2,01 und 10 variiert werden.

Soll ein rechteckähnlicher Formhohlraumquerschnitt im wesentlichen aus vier Bogenlinien bestehen, die je ¼ der Umfangslinie einschliessen, so wird gemäss einem weiteren Ausführungsbeispiel die Kurvenfunktion

$$\left|\frac{X}{A}\right|^n + \left|\frac{Y}{B}\right|^n = 1$$

gewählt und der Exponent "n" von in Stranglaufrichtung sich folgenden Umfangslinien zwischen 4 und 50 variiert.

Bei einem quadrat- oder rundähnlichen Formhohlraumquerschnitt, verbunden mit einer geringen plastischen Verformung der Strangschale, gemäss der in EP-PS 0 498 296 beschriebenen Convex-Technologie, kann der Wert für die Hochzahl "n" von in Stranglaufrichtung sich folgenden Umfangslinien gemäss einem weiteren Ausführungsbeispiel für Rechteckformate zwischen 4 - 50 und für Rundformate zwischen 2 und 2,5 betragen.

Neben mathematisch definierten gebogenen Umfangslinien des Kokillenhohlraumquerschnittes kann zur Erreichung eines im wesentlichen gleichmässigen Sollwärmedurchganges auch die Dimensionierung der Wasserkühlung der Kupferwand in Betracht gezogen werden. Gemäss einem zusätzlichen Ausführungsbeispiel wird vorgeschlagen, dass mit zunehmendem Krümmungsgrad der gebogenen Umfangslinie des Formhohlraumes, insbesondere in den Eckbereichen mit Hohlkehlbogen, die Wasserkühlung der Kupferwand reduziert wird.

In der Regel werden Kokillen zum Stranggiessen von Stahl in Knüppel- und Vorblockformaten aus relativ dünnwandigen Kupferrohren hergestellt. Eine mechanische Bearbeitung kann bei solchen rohrförmigen Kokillen nur durch die Eingiess- bzw. Strangaustrittsöffnung erfolgen. Neben Rohrkokillen mit gerader Längsachse werden auf sogenannten Bogenstranggiessmaschinen Rohrkokillen mit gebogener Längsachse verwendet, die eine mechanische Bearbeitung des Kokillenhohlraumes zusätzlich erschweren. Zur Erreichung einer hohen Massgenauigkeit wird gemäss einem weiteren Ausführungsbeispiel vorgeschlagen, den Formhohlraum der Kokille mittels einer numerisch gesteuerten, spanabhebenden Bearbeitungsmaschine herzustellen.

Im Nachfolgenden werden anhand von Figuren Ausführungsbeispiele der Erfindung erläutert.

Dabei zeigen:

Fig. 1    eine Draufsicht auf eine linke Hälfte eines Kokillenrohres gemäss dem Stand der Technik für einen Knüppelquerschnitt,

Fig. 2    eine Draufsicht auf eine rechte Hälfte eines Kokillenrohres gemäss der Erfindung für einen Knüppelquerschnitt,

Fig. 3    eine vergrösserte Eckausbildung des Kokillenrohres gemäss Fig. 2,

Fig. 4    eine vergrösserte Eckausbildung eines Kokillenrohres mit Rechteckquerschnitt mit ungleichen Seitenlängen,

Fig. 5    Umfangslinien eines quadratischen Formhohlraumquerschnittes,

Fig. 6    eine Kokille mit Strangschalenverformung (Convex Technology) und

Fig. 7    Umfangslinien für einen im wesentlichen runden Querschnitt.

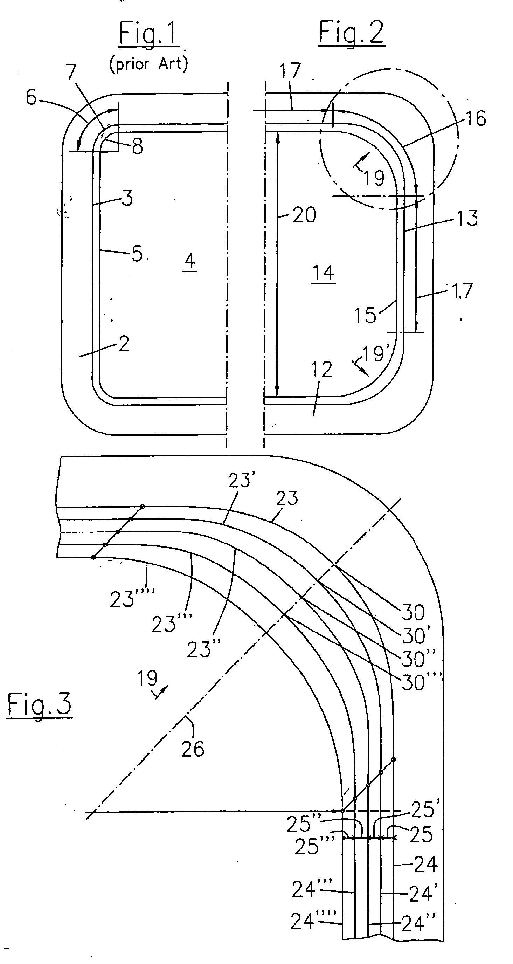

In Fig. 1 ist eine Hälfte eines Kokillenrohres 2 aus Kupfer dargestellt. Eine Umfangslinie 3 eines Formhohlraumes 4 stellt die Kokillenöffnung auf der Eingiessseite und eine Umfangslinie 5 stellt die Kokillenöffnung auf der Strangaustrittsseite dar. Die Umfangslinie 5 ist gegenüber der Umfangslinie 3 um eine Konizität des Formhohlraumes 4 kleiner. Ein Teilabschnitt 6 der Umfangslinien 3 und 5 des Formhohlraumquerschnittes weist eine Kreisbogenlinie in der Form einer Eckhohlkehle mit einem Eckradius von beispielsweise 6 mm auf. Die Wände des Kokillenrohres 2, auch Formhohlraumwände genannt, sind wassergekühlt, wie im Stand der Technik vielfach bekannt. Der Krümmungsgrad 1/R einer Kreisbogenlinie 7 im Teilabschnitt 6 auf der Eingiessseite ist kleiner als der Krümmungsgrad 1/R einer Kreisbogenlinie 8 im Teilabschnitt 6 auf der Strangaustrittseite.

In Fig. 2 ist eine Hälfte eines Kokillenrohres 12 mit Umfangslinien 13 und 15 eines Formhohlraumes 14 dargestellt. Die Umfangslinie 13 des Kokillenhohlraumquerschnittes begrenzt den Formhohlraum 14 auf der Eingiessseite und die Umfangslinie 15 begrenzt den Formhohlraum 14 auf der Strangaustrittsseite. Die Umfangslinien 13, 15, bzw. die Formhohlraumwand, sind in den Eckbereichen entlang von Abschnitten 16 gebogen und entlang von Abschnitten 17 gerade. Hohlkehlbogen in Eckbereichen 19, 19' sind so dimensioniert, dass sie beidseitig mindestens 10 % der Seitenlänge 20 des Formhohlraumquerschnittes am Kokillenausgang beanspruchen. Bei einem Querschnitt von beispielsweise 120 mm x 120 mm beansprucht der Hohlkehlbogen auf jeder Seite mindestens 12 mm der Seitenlänge 20, vorzugsweise 18 - 24 mm oder 15 - 20 % der Seitenlänge 20. Die gebogene Umfangslinie 13 in den Eckbereichen 19 ist durch eine mathematische Kurvenfunktion mit einem Basisparameter und einem Exponenten festgelegt, welche von einer Kreislinie abweicht. In Fig. 3 wird die Formgebung des Eckbereiches 19 ausführlich erläutert.

In Fig. 3 sind im Eckbereich 19 in Stranglaufrichtung sich folgende gebogene Umfangslinien 23 - 23'''' dargestellt. Der Eckbereich 19 kann in seiner Breite von der Eingiessseite zur Austrittsseite entlang dem Giesskonus konstant sein, und die Uebergangspunkte krumm - gerade können auf der Linie R - R4 oder aber auf einer geraden oder gebogenen Linie R1-R4 angeordnet werden. Abstände 25 - 25''' zeigen eine stetige Konizität des Formhohlraumes. Die gebogenen Umfangslinien 23 - 23'''' und die geraden Linien 24 - 24'''' stellen Höhenkurven der Formhohlraumwand dar. Die Bogenlinien sind definiert durch die mathematische Kurvenfunktion $|X|^n + |Y|^n = |R|^n$, wobei durch Auswahl des Exponenten "n" der Krümmungsgrad jeder Bogenlinie 23 - 23'''' festgelegt ist. Eine Zielsetzung bei der Auswahl ist es, den Formhohlraum so zu gestalten, dass die sich bildende Strangschale über den Kokillenumfang gesehen gleichmässig abkühlt und sich in der Strangschale möglichst ein symmetrisches Temperaturfeld einstellt. Je nach Ausgestaltung der Strangquerschnittsform kann ein über den Umfang gesehen im wesentlichen gleichmässiger Sollwärmedurchgang bei rundähnlichen Querschnitten nur durch die Geometrie des Formhohlraumquerschnittes oder bei rechteckähnlichen Formhohlraumquerschnitten mit einer Kombination Geometrie und unterschiedliche Kühlung entlang der Umfangslinie erreicht werden. Im vorliegenden Beispiel wird der Exponent der Kurvenfunktion wie folgt variiert:

| | |
|---|---|
| Bogenlinie 23 | Exponent "n" 4,0 |
| Bogenlinie 23' | Exponent "n" 3,5 |
| Bogenlinie 23" | Exponent "n" 3,0 |
| Bogenlinie 23''' | Exponent "n" 2,5 |
| Bogenlinie 23'''' | Exponent "n" 2,0 (Kreisbogen) |

Der Exponent variiert in diesem Beispiel zwischen 4 und 2 stetig. Je nach Wahl der Konizität des Formhohlraumes können auch unstetige Sprünge angewendet werden. Durch eine Verkleinerung des Exponenten zwischen 4 und 2 wird der Krümmungsgrad der Bogenlinien kleiner, oder mit anderen Worten, die Bogenlinien strecken sich zum Kokillenausgang hin. Diese Streckung bewirkt im weiteren, dass entlang einer Diagonale 26 die Formhohlraumkonizität am grössten ist und in Richtung zu den geraden Wänden hin abnimmt. Der Krümmungsgrad der gebogenen Umfangslinien 23 - 23''' ist zum maximalen Krümmungsgrad hin 30 - 30''' anschwellend. Der Krümmungsgrad entlang der gebogenen Umfangslinie 23'''' ist konstant (Kreisbogen). Im gebogenen Anschnitt 16 der Eckbereiche 19 kann eine Spaltaufhebung zwischen der sich durch den Formhohlraum bewegenden Strangschale und der Formhohlraumwand bzw. eine Strangschalenumformung gezielt gesteuert werden.

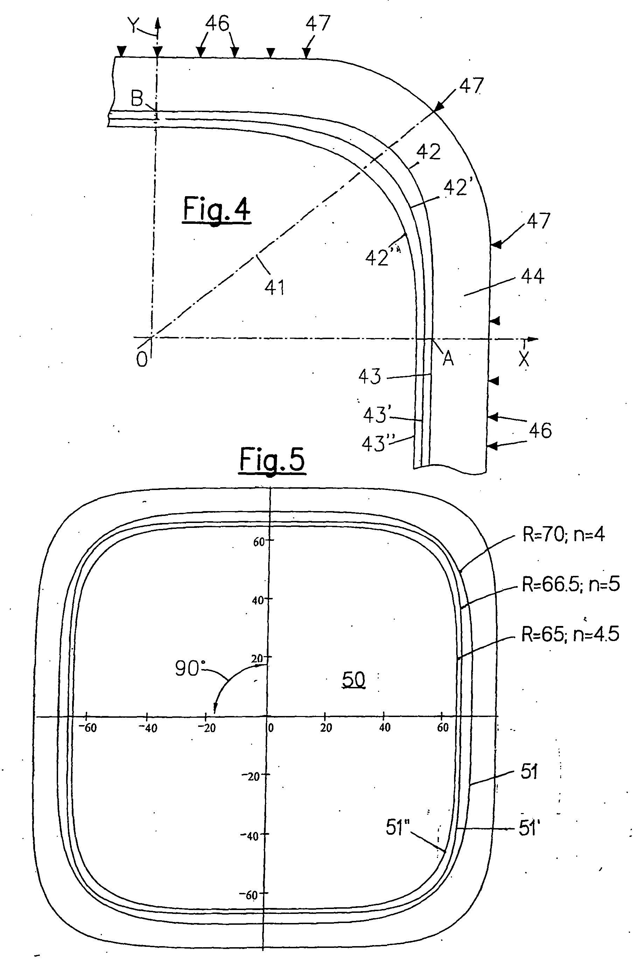

In Fig. 4 ist eine beidseits einer Diagonale 41 unsymmetrische Eckausbildung dargestellt. Das Mass OB ist ungleich OA. Die Kurvenfunktion von Bogenlinien 42 - 42" ist

$$\left|\frac{X}{A}\right|^n + \left|\frac{Y}{B}\right|^n = 1 \quad.$$

Die Bogenlinien 42 - 42" haben in diesem Beispiel folgende Exponenten:

| | |
|---|---|
| Bogenlinie 42 | Exponent "n" = 4,0 |
| Bogenlinie 42' | Exponent "n" = 3,4 |
| Bogenlinie 42" | Exponent "n" = 3,0 |

Anschliessend an die Bogenlinien 42 - 42" sind gerade Umfangsabschnitte 43 - 43".

Eine Formhohlraumwand 44 besteht aus Kupfer. Durch Dreiecke 46, 47 mit ungleichem gegenseitigen Abstand an der Kokillenaussenseite ist schematisch eine unterschiedliche Kühlintensität dargestellt. Die enger angeordneten Dreiecke 46 deuten auf eine grössere Kühlintensität und die Dreiecke 47 mit gegenseitig grösseren Abständen deuten auf eine schwächere Kühlintensität hin.

Im Beispiel in Fig. 5 sind für eine klare Uebersicht nur drei in Stranglaufrichtung sich folgende Umfangslinien 51 - 51" eines quadratähnlichen Formhohlraumes 50 dargestellt.

Jede Umfangslinie ist aus vier Bogenlinien, die je einen Winkel von 90° einschliessen, zusammengesetzt. Die vier Bogenlinien folgen der mathematischen Funktion

$$|X|^n + |Y|^n = |R|^n.$$

Wird die Giesskonizität "t" ebenfalls in der mathematischen Funktion dargestellt, so lautet sie beispielsweise

$$|X|^n + |Y|^n = |R-t|^n.$$

Diesem Beispiel sind folgende Zahlenwerte zu Grunde gelegt:

| Bogenlinie | Exponent n | R - t | t |
|---|---|---|---|
| 51 | 4 | 70 | 0 |
| 51' | 5 | 66,5 | 3,5 |
| 51" | 4,5 | 65 | 5 |

Je nach Wahl der Grösse und Abstufung von in Stranglaufrichtung sich folgenden Exponenten kann die Umfangslinie so gestaltet werden, dass mindestens auf einer Teillänge der Kokille zwischen den hohlkehlartig gestalteten Eckbereichen eine Verformung der Strangschale beim Durchlauf durch die Kokille durch eine entsprechende Wahl des Exponenten sich folgender Bogenlinien erreicht wird.

Im Beispiel in Fig. 5 wird zur Erreichung einer Strangschalenverformung, insbesondere zwischen den Eckbereichen (Convex Technology) in der eingiessseitigen Kokillenhälfte der Exponent "n" der beiden in Stranglaufrichtung sich folgenden Bogen 51 und 51' von beispielsweise 4 auf 5 vergrössert. In der strangaustrittsseitigen Kokillenhälfte wird zwischen den in Stranglaufrichtung sich folgenden Bogenlinien 51' und 51" durch eine Verkleinerung des Exponenten von beispielsweise 5 auf 4,5 im wesentlichen ohne Strangschalenverformung ein gleichmässiger Sollwärmedurchgang erreicht. Dieses Beispiel zeigt, dass in Stranglaufrichtung sich folgende Bogenlinien in einem ersten Kokillenteil durch Vergrösserung des Exponenten und in einem zweiten Kokillenteil durch Verkleinerung des Exponenten, d.h. durch Anpassung der Geometrie des Formhohlraumes, der Sollwärmedurchgang erreicht werden kann. Anderseits ist es aber auch möglich, den Sollwärmedurchgang mit oder ohne Strangschalenverformung durch eine in Abhängigkeit der Geometrie der gebogenen Umfangslinie unterschiedliche Kühlung entlang der Umfangslinie zu erreichen.

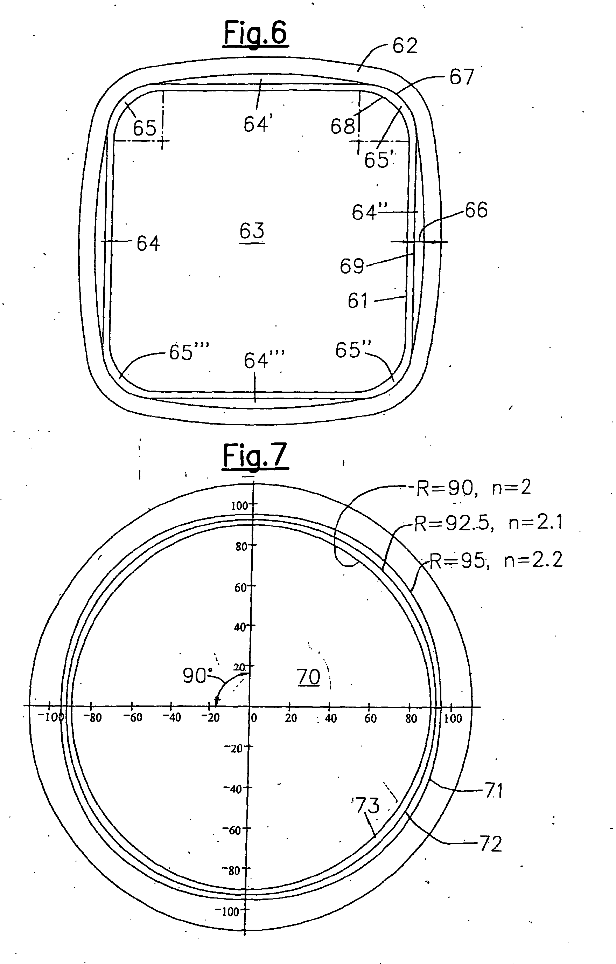

Fig. 6 zeigt eine Rohrkokille 62 aus Kupfer zum Stranggiessen von Stahl für einen Knüppel- oder Vorblockstrang mit einem Formhohlraum 63. Der Querschnitt des Formhohlraumes 63 ist am Kokillenausgang quadratisch und zwischen benachbarten Seitenwänden 64 - 64''' sind hohlkehlartig ausgebildete Eckbereichen 65 - 65''' angeordnet. Die Hohlkehlbogen sind nicht als Kreislinie ausgebildet, sondern weisen eine Kurvenform gemäss der mathematischen Funktion $|X|^n + |Y|^n = |R|^n$ aus, wobei der Exponent "n" einen Wert zwischen 2,0 und 2,5 aufweist. Auf der Kokilleneingiessseite ist in diesem Beispiel die Kurvenform des Hohlkehlbogens 67 mit einem Exponenten n = 2,2 und auf der Kokillenaustrittsseite ist die Kurvenform des Hohlkehlbogens 68 mit einem Exponenten n = 2,02 ausgebildet, d.h. die Kurvenform ist strangaustrittsseitig einem Kreisbogen sehr nahe. Wird die konvexe Ausbauchung cosinusförmig ausgeführt, so kann die Kurvenform des Hohlkehlbogens mit einem Exponenten "n" zwischen 3 - 10 ausgebildet sein.

Bei dem Ausführungsbeispiel in Fig. 6 sind die Seitenwände 64 - 64''' des Formhohlraumes 63 im oberen Kokillenteil auf einer Teillänge der Kokille 62, beispielsweise 40 %-60 % der Kokillenlänge konkav gestaltet. Auf dieser Teillänge nimmt die Bogenhöhe 66 in Stranglaufrichtung ab. Ein in der Kokille sich bildender Strang mit konvexer Strangschale wird in der Teillänge kontinuierlich leicht verformt, bis der Bogen in eine Gerade übergeht. In der zweiten unteren Kokillenhälfte sind die Umfangslinien 61, 69 des Formhohlraumes 63 geradlinig. In diesem Kokillenteil ist der Formhohlraum mit einer Konizität versehen, die der Schwindung des Strangquerschnittes in diesem Kokillenteil entspricht.

Die Wahl des Exponenten "n" wird bei Kokillen mit konvexen Seitenwänden so eingestellt, dass die Sehnenverlängerung bei abnehmender Bogenhöhe keinen schädlichen Druck auf die erstarrende Strangschale in den Eckbereichen 65 - 65''' ausübt und der Wärmefluss in den abgerundeten Eckbereichen 65 - 65''' sich dem Wärmedurchgang der im wesentlichen geraden Wänden anpasst. Eine zusätzliche Anpassung des Wärmedurchganges kann durch unterschiedliche Kühlung der Formhohlraumwände entlang der Umfangslinie des Kokillenhohlraumquerschnittes erreicht werden.

In Fig. 7 sind schematisch drei Umfangslinien 71 - 73 für einen kokillenausgangsseitig runden Formhohlraum 70 dargestellt. Die Umfangslinien 71 und 72 sind aus vier Bogenlinien, die in diesem Beispiel einen Winkel von 90° einschliessen, zusammengesetzt. Diese Bogenlinien folgen der mathematischen Kurvenfunktion $|X|^n + |Y|^n = |R|^n$ und der Wert des Exponenten "n" der Bogenlinien 71 bzw. 72 ist 2,2 bzw. 2,1. Die Umfangslinie 73 am Kokillenausgang ist kreisförmig. In einer oberen Teillänge der Kokille mit kreisähnlichem Formhohlraumquerschnitt kann durch eine Vergrösserung des Unterschiedes des Exponenten der Kurvenfunktion zwischen den Bogenlinien 71 und 72 ein Mass für plastischen Verformung der sich bildenden Strangschale in der oberen Kokillenhälfte bestimmt werden. Das Mass der plastischen Verformung ist mitbestimmend für den Wärmedurchgang zwischen Strangschale und Kokillenwand.

Alle Formhohlräume in den Fig. 1 - 7 sind zur Vereinfachung mit einer geraden Längsachse versehen. Kokillen für Kreisbogenstranggiessanlagen weisen eine gebogene Längsachse mit einem Radius in der Regel zwischen 4 m und 12 m auf.

**Patentansprüche**

1. Formhohlraum einer Kokille zum Stranggiessen von Knüppel-, Vorblock- und Vorprofilsträngen, wobei Umfangslinien (13, 15) des Formhohlraumquerschnittes mindestens in den Eckbereichen (19, 19') des Formhohlraumquerschnittes gebogene Abschnitte (16) aufweisen und Wände des Formhohlraumes (4, 14) gekühlt sind, wobei die Umfangslinien in den hohlkehlartig gebogenen Eckbereichen (19, 19') des Formhohlraumes zur Steuerung einer gezielten Strangschalenumformung Krümmungsverläufe aufweisen, die auf einen max. Krümmungsgrad (1/R) (30 - 30''') an- und von diesem wieder abschwellen und wobei sich der vorbestimmte max. Krümmungsgrad (30 - 30''') von in Stranglaufrichtung sich nachfolgenden Umfangslinien (23 - 23'''') der gleichen Eckbereiche mindestens über einen Teilbereich der Kokillenlänge (19, 19') stetig oder unstetig verkleinert.

2. Formhohlraum nach Anspruch 1, **dadurch gekennzeichnet, dass** die Bogenlinien (42 - 42") einer mathematischen Kurvenfunktion

$$\left|\frac{X}{A}\right|^{n} + \left|\frac{Y}{B}\right|^{n} = 1$$

bzw. wenn A = B der Kurvenfunktion $|X|^n + |Y|^n = |R|^n$ folgen und der Exponent "n" grösser als 2 und kleiner als 100 ist.

3. Formhohlraum nach Anspruch 1, **dadurch gekennzeichnet, dass** der Formhohlraumquerschnitt rechteckähnlich, vorzugsweise quadratähnlich ist und hohlkehlartig ausgebildete Eckbereiche (19, 19') zwischen vier im wesentlichen ebenen Seitenwänden aufweist und dass die Hohlkehlbogen in den Eckbereichen (19, 19') der Kurvenfunktion $|X|^n + |Y|^n = |R|^n$ folgen und der Wert des Exponenten "n" zwischen 2, 1 und 10 beträgt.

4. Formhohlraum nach Anspruch 1, **dadurch gekennzeichnet, dass** der Formhohlraumquerschnitt rechteckähnlich ist und aus vier Bogenlinien, die je etwa einen Winkel von 90° einschliessen, zusammengesetzt ist und dass die Bogenlinie der mathematischen Funktion

$$\left|\frac{X}{A}\right|^{n} + \left|\frac{Y}{B}\right|^{n} = 1$$

folgen sowie der Wert des Exponenten "n" zwischen 3 und 50, vorzugsweise 4 und 10, beträgt.

5. Formhohlraum nach Anspruch 1, **dadurch gekennzeichnet, dass** der Formhohlraumquerschnitt kreisähnlich ist und aus Bogenlinien (71 - 73), die je einen Winkel zwischen 15 und 180° einschliessen, zusammengesetzt ist, und dass die Bogenlinien (71, 72) der mathematischen Funktion $|X|^n + |Y|^n = |R|^n$ folgen und der Wert des Exponenten "n" grösser als 2 und kleiner als 2,3 ist.

6. Formhohlraum nach Anspruch 1, **dadurch gekennzeichnet, dass** der Formhohlraumquerschnitt quadratähnlich ist und aus vier Bogenlinien (51 - 51"), die je einen Winkel von 90° einschliessen, zusammengesetzt ist und dass die Bogenlinien (51 - 51") der mathematischen Funktion $|X|^n + |Y|^n = |R|^n$ folgen und dass mindestens auf einer Teillänge der Kokille ein zwischen den hohlkehlartig ausgebildeten Eckbereichen angeordneter Abschnitt der Umfangslinie eine Verformung der Strangschale beim Durchlauf durch die Kokille durch eine Strekkung des Abschnittes der Bogenlinien (51 - 51") steuerbar ist.

7. Formhohlraum nach einem der Ansprüche 1 -6, **dadurch gekennzeichnet, dass** der Formhohlraum zum Kokillenausgang hin mit einer Giesskonizität gemäss der mathematischen Funktion $|X|^n + |Y|^n = |R-t|^n$ versehen ist, wobei t ein Mass für die Konizität ist.

8. Formhohlraum nach Anspruch 1, **dadurch gekennzeichnet, dass** der Formhohlraum (63) rechteckähnlich, vorzugsweise quadratähnlich ist und hohlkehlartig ausgebildete Eckbereiche (65 - 65"') mit Hohlkehlbogen (67, 68) gemäss der Kurvenfunktion $|X|^n + |Y|^n = |R|^n$ aufweist und der Wert des Exponenten "n" von in Stranglaufrichtung sich folgenden Bogenlinien zwischen 2,1 und 10 beträgt sowie zwischen den Hohlkehlbogen (67) gebogene Seitenwände aufweist, deren Krümmungsgrad sich mindestens auf einer Teillänge der Kokille derart streckt, dass sich die Strangschale beim Durchlauf durch die Teillänge plastisch verformt.

9. Formhohlraum nach einem der Ansprüche 1 - 8, **dadurch gekennzeichnet, dass** der Formhohlraum (14) einer Rohrkokille (12) zugeordnet ist.

10. Formhohlraum nach einem der Ansprüche 1-9, **dadurch gekennzeichnet, dass** die Kokille (12) aus wassergekühlten Kupferwänden besteht und dass mit zunehmendem Krümmungsgrad von Abschnitten der gebogenen Umfangslinie des Formhohlraumes, insbesondere in den Eckbereichen (19) mit Hohlkehlbogen, die Wasserkühlung der Kupferwand reduziert ist.

11. Kokille nach einem der Ansprüche 1 - 10, **dadurch gekennzeichnet, dass** die Geometrie des Formhohlraumes mittels einer numerisch gesteuerten, spanabhebenden Bearbeitungsmaschine hergestellt ist.

**Claims**

1. A die cavity of a casting die for continuously casting billets, blooms and blanks, peripheral lines (13, 15) of the die cavity cross-section comprising curved portions (16) at least in the corner regions (19, 19') of the die cavity cross-section and walls of the die cavity (4, 14) being cooled, the peripheral lines in the concavely curved corner regions (19, 19') of the die cavity exhibiting curvature profiles, in order to control purposeful deformation of the strand shell, which grow towards and then away from a max. degree of curvature (1/R) (30-30"') and the predetermined max. degree of curvature (30-30"') of successive peripheral lines (23-23"") in the direction of strand travel of the same corner regions being continuously or discontinuously reduced at least over part of the length of the casting die (19, 19').

**2.** A die cavity according to claim 1, **characterised in that** the arc lines (42-42") obey the mathematical curve function

$$\left|\frac{X}{A}\right|^{n} + \left|\frac{Y}{B}\right|^{n} = 1$$

or if A = B the curve function $|X|^n + |Y|^n = R^n$ and the exponent "n" is greater than 2 and less than 100.

**3.** A die cavity according to claim 1, **characterised in that** the die cavity cross-section is similar to rectangular in shape, preferably similar to square in shape, and comprises concavely curved corner regions (19, 19') between four substantially planar side walls and **in that** the concave surface arc in the corner regions (19, 19') obeys the curve function $|X|^n + |Y|^n = |R|^n$ and the value of the exponent "n" is between 2.1 and 10.

**4.** A die cavity according to claim 1, **characterised in that** the die cavity cross-section is similar to rectangular in shape and is composed of four arc lines which each approximately enclose an angle of 90°, and **in that** the arc lines obey the mathematical function

$$\left|\frac{X}{A}\right|^{n} + \left|\frac{Y}{B}\right|^{n} = 1$$

and the value of the exponent "n" is between 3 and 50, preferably 4 and 10.

**5.** A die cavity according to claim 1, **characterised in that** the die cavity cross-section is similar to circular in shape and is composed of arc lines (71-73) which each enclose an angle of between 15 and 180°, and **in that** the arc lines (71, 72) obey the mathematical function $|X|^n + |Y|^n = |R|^n$ and the value of the exponent "n" is greater than 2 and less than 2.3.

**6.** A die cavity according to claim 1, **characterised in that** the die cavity cross-section is similar to square in shape and is composed of four arc lines (51-51") which each enclose an angle of 90° and **in that** the arc lines (51-51"). obey the mathematical function $|X|^n + |Y|^n = |R|^n$ and **in that**, at least over part of the length of the casting die, deformation of the strand shell on passage through the casting die is permitted by extension of the portion of the arc lines (51-51") over a portion of the peripheral line arranged between the concavely curved corner regions.

**7.** A die cavity according to any one of claims 1-6, **characterised in that** the die cavity is provided at the die outlet with a casting conicity in accordance with the mathematical function $|X|^n + |Y|^n = |R-t|^n$, wherein t is a measure of conicity.

**8.** A die cavity according to claim 1, **characterised in that** the die cavity (63) is similar to rectangular in shape, preferably similar to square in shape, and comprises concavely curved corner regions (65-65''') with concave surface arcs (67, 68) in accordance with the curve function $|X|^n + |Y|^n = |R|^n$ and the value of the exponent "n" of successive arc lines in the direction of strand travel is between 2.1 and 10 and comprises curved side walls between the concave surface arcs (67), the degree of curvature of which side walls extends over at least part of the length of the casting die in such a manner that, on passage through said the part of the length, the strand shell is plastically deformed.

**9.** A die cavity according to any one of claims 1-8, **characterised in that** the die cavity (14) is assigned to a tubular casting die (12):

**10.** A die cavity according to any one of claims 1-9, **characterised in that** the casting die (12) consists of water-cooled copper walls and **in that**, as the degree of curvature of portions of the curved peripheral line of the die cavity increases, in particular in the corner regions (19) with concave surface arcs, water cooling of the copper wall is reduced.

**11.** A casting die according to any one of claims 1-10, **characterised in that** the geometry of.the die cavity is produced by means of a numerically controlled, cutting machine tool.

**Revendications**

**1.** Cavité de coulée d'une lingotière destinée à la coulée continue de barres pour billettes, blooms et ébauches de profilés, dans laquelle des lignes périphériques (13, 15) de la section transversale de la cavité de coulée présentent au moins dans les zones de coin (19, 19') de la section transversale de la cavité de coulée, des tronçons courbes (16), et des parois de la cavité de coulée (4, 14) sont refroidies, la cavité de coulée étant d'une configuration telle, que les lignes périphériques dans les zones de coin (19, 19') courbes à la manière de congés en creux de la cavité de coulée, présentent pour piloter une déformation ciblée de la peau de la barre de coulée, des tracés de courbure, qui croissent jusqu'à un degré de courbure (1/R) maximal (30-30''') et décroissent à nouveau à partir de celui-ci, et que le degré de courbure maximal (30-30''') prédéterminé de lignes périphériques (23-23''''), qui se succèdent dans la direction de déplacement de la barre de coulée, des mêmes zones de coin, diminue de manière continue ou discontinue au moins sur une zone partielle de la longueur de lingotière (19, 19').

2. Cavité de coulée selon la revendication 1, **caractérisée en ce que** les lignes courbes (42-42'') suivent une fonction de courbe mathématique

$$\left|\frac{X}{A}\right|^{n} + \left|\frac{Y}{B}\right|^{n} = 1$$

ou respectivement, lorsque A = B, la fonction de courbe $|X|^n + |Y|^n = |R|^n$, et l'exposant "n" est supérieur à 2 et inférieur à 100.

3. Cavité de coulée selon la revendication 1, **caractérisée en ce que** la section transversale de cavité de coulée est similaire à un rectangle, de préférence similaire à un carré, et présente des zones de coin (19, 19') à la manière de congés en creux entre quatre parois latérales sensiblement planes, et **en ce que** les courbes des congés en creux dans les zones de coin (19, 19') suivent la fonction de courbe $|X|^n + |Y|^n = |R|^n$, et la valeur de l'exposant "n" se situe entre 2,1 et 10.

4. Cavité de coulée selon la revendication 1, **caractérisée en ce que** la section transversale de cavité de coulée est similaire à un rectangle, et est composée de quatre lignes courbes qui couvrent chacune environ un angle de 90°, et **en ce que** les lignes courbes suivent la fonction mathématique

$$\left|\frac{X}{A}\right|^{n} + \left|\frac{Y}{B}\right|^{n} = 1$$

et la valeur de l'exposant "n" se situe entre 3 et 50, de préférence entre 4 et 10.

5. Cavité de coulée selon la revendication 1, **caractérisée en ce que** la section transversale de cavité de coulée est similaire à un cercle et est composée de lignes courbes (71-73) qui couvrent chacune un angle entre 15 et 180°, et **en ce que** les lignes courbes (71, 72) suivent la fonction mathématique $|X|^n + |Y|^n = |R|^n$, et la valeur de l'exposant "n" est supérieure à 2 et inférieure à 2,3.

6. Cavité de coulée selon la revendication 1, **caractérisée en ce que** la section transversale de cavité de coulée est similaire à un carré et est composée de quatre lignes courbes (51-51''), qui couvrent chacune un angle de 90°, **en ce que** les lignes courbes (51-51'') suivent la fonction mathématique $|X|^n + |Y|^n = |R|^n$, et **en ce que** sur au moins une longueur partielle de la lingotière, un tronçon de la ligne périphérique, agencé entre les zones de coin de configuration en forme de congé en creux, permet de piloter une déformation de la peau de la barre de coulée lors du passage dans la lingotière, par un aplatissement de ce tronçon des lignes courbes (51-51'').

7. Cavité de coulée selon l'une des revendications 1-6, **caractérisée en ce que** la cavité de coulée présente en direction de la sortie de lingotière, une conicité de coulée conforme à la fonction mathématique $|X|^n + |Y|^n = |R\text{-}t|^n$,, t étant une mesure pour la conicité.

8. Cavité de coulée selon la revendication 1, **caractérisée en ce que** la cavité de coulée (63) est similaire à un rectangle, de préférence similaire à un carré, et présente des zones de coin (65-65''') réalisées à la manière de congés en creux avec des courbes de congé en creux (67, 68) conformes à la fonction de courbe $|X|^n + |Y|^n = |R|^n$, et la valeur de l'exposant "n" de lignes courbes se succédant dans la direction de déplacement de la barre de coulée se situe entre 2,1 et 10, la cavité de coulée présentant également entre les courbes de congé en creux (67), des parois latérales courbes dont le degré de courbure s'aplatit sur au moins une longueur partielle de la lingotière, de façon à ce que la peau de la barre de coulée se déforme de manière plastique lors du passage dans cette longueur partielle.

9. Cavité de coulée selon l'une des revendications 1-8, **caractérisée en ce que** la cavité de coulée (14) est associée à une lingotière tubulaire (12).

10. Cavité de coulée selon l'une des revendications 1-9, **caractérisée en ce que** la lingotière (12) est constituée de parois de cuivre refroidies par eau, et **en ce qu'**avec un degré de courbure croissant de tronçons de la ligne périphérique courbe de la cavité de coulée, notamment dans les zones de coin (19) à courbes en congé creux, le refroidissement par eau de la paroi de cuivre est réduit.

11. Lingotière selon l'une des revendications 1-10, **caractérisée en ce que** la géométrie de la cavité de coulée est réalisé au moyen d'une machine-outil d'usinage par enlèvement de copeaux, à commande numérique.

Fig.1
(prior Art)

Fig.2

Fig.3

## Fig.6

## Fig.7

R=90, n=2

R=92.5, n=2.1

R=95, n=2.2

## Fig.4

## Fig.5

R=70; n=4

R=66.5; n=5

R=65; n=4.5

90°

50

51

51'

51"

**EP 1 547 705 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 53011124 A
- JP 60040647 A
- JP 11151555 A
- JP OS09262641 A
- EP PS0498296 A